# EUROPÄISCHE PATENTSCHRIFT

(11) **EP 2 811 074 B1**
(45) Veröffentlichungstag und Bekanntmachung des Hinweises auf die Patenterteilung: **09.11.2016**
(21) Anmeldenummer: 13004380.5
(22) Anmeldetag: 09.09.2013
(51) Int. Cl.: E01F 8/00

(54) **Schallschutzsystem für Verkehrswege**
Noise reduction system for traffic routes
Système d'insonorisation pour voies de circulation

(30) Priorität: 18.09.2012 AT 3662012
(43) Veröffentlichungstag der Anmeldung: 10.12.2014
(73) Patentinhaber: orange architekten Ges.b.R., 10997 Berlin (DE)
(72) Erfinder: Tschada, Peter, 6020 Innsbruck (AT)
(74) Vertreter: Cunow, Gerda

(56) Entgegenhaltungen:
- EP-A2- 0 742 319
- WO-A1-2005/033412
- AT-B- 408 999
- FR-A1- 2 707 094

## Beschreibung

Die vorliegende Erfindung bezieht sich auf ein Schallschutzsystem für Verkehrswege, insbesondere Schienenwege, umfassend eine Mehrzahl von im Wesentlichen C-förmigen sich zu einer Schallquelle öffnenden, mit der Waagrechten einen spitzen Winkel einschließende, emittierten Schall reflektierende, miteinander verbindbare niedrigbauende Schallschutzelemente, wobei jedes Schallschutzelement einstückig ausgebildet ist.

Schallschutzsysteme für Verkehrswege sind in unterschiedlichsten Ausführungen bekannt und werden insbesondere neben Autobahnen und Bahngeleisen in verbautem Gebiet oder städtischem Umfeld eingesetzt, um Anrainer vor unnötigen Lärmbelästigungen zu schützen. Derartige Schallschutzsysteme sind häufig konstruktiv aufwendige Bauwerke, um den von den Verkehrswegen emittierten Schall so vollständig wie möglich zu absorbieren und somit die Lärmbelästigung auf der verbauten Seite des Schallschutzsystems so gering wie möglich zu halten. Zur Erzielung dieses Effekts wurden bereits die unterschiedlichsten Systeme zum Einsatz gebracht, welche einerseits meist relativ hochbauend sind und andererseits aus den verschiedensten Materialien gefertigt sind, um sowohl einen ausreichenden Lärmschutz zur Verfügung zu stellen als auch ästhetischen Anforderungen zu genügen.

Bei dem in der DE-OS 39 34 489 geoffenbarten Schallschutzsystem wurden bereits Ansätze getätigt, die Bauhöhe des Schallschutzsystems zu verringern, indem auf einem Betonsockel ein Querschiff aufgesetzt wurde, welches einerseits niedrig ausgebildet ist und zur Erzielung eines ausreichenden Schallschutzes an der Innenseite, d.h. an der Schallquelle zugewandten Seite mit einem Absorptionsmaterial versehen ist, um den Geräuschpegel in der Umgebung möglichst niedrig zu halten.

Der WO 2005/033412 ist ein Schallschutzsystem entnehmbar, bei welchem ein sich zu einer Schallquelle hin öffnendes, im Wesentlichen C-förmiges Schallschutzelement auf einem Sockel angeordnet ist, bei welchem ein Schall absorbierendes Material wenigstens teilweise in den Rahmen des Schallschutzelements eingeformt ist. Ein derartiges Schallschutzelement kann mit einem Verlängerungselement bzw. Abschirmelement ausgestattet sein, welches Abschirmelement beispielsweise aus durchsichtigem Material ausgebildet ist, um einen freien Blick auf die Umgebung zu gewährleisten.

Der AT-B 408 999 ist ein Bahnsteigelement zum Ein- und Aussteigen von Personen entnehmbar, welches Bahnsteigelement neben einem Sockelelement und einem Steg ein waagrechtes Deckelement aufweist, auf welches Deckelement die aus einem Zug aussteigenden Personen auftreten sollen. Zur Verringerung der Lärmbelästigung ist dieses Bahnsteigelement aus einer zu der Schallquelle gerichteten Seite mit einem in eine im Wesentlichen C-förmige Ausnehmung eingefügten schalldämmenden Element versehen.

Der FR 2 707 094 ist ein Schallschutzelement zu entnehmen, welches zu einer Schallquelle geneigt ausgebildet ist und welches auf seiner zur Schallquelle gerichteten Seite wenigstens teilweise mit einem Schall absorbierenden Material abgedeckt ist.

Aus der AT-PS 501 910 ist bereits ein niedrig bauendes Schallschutzsystem für Verkehrswege bekannt geworden, bei welchem eine Mehrzahl von im Wesentlichen C-förmigen sich zu einer Schallquelle öffnende, mit der Waagrechten einen spitzen Winkel einschließende miteinander verbindbare Schallschutzelemente an einer Grundkonstruktion, insbesondere einem Fundament festgelegt sind. Bei diesem niedrigbauenden Schallschutzsystem wurde erstmals eine reflektierende Variante eines Schallschutzsystems zum Einsatz gebracht, welche im Prinzip den Schall zurück in Richtung des Verursachers bzw. den unter dem Verursacher befindlichen Boden reflektierte, wo er zum größten Teil absorbiert wird. Nachteilig an diesem bekannten System ist der relativ große Aufwand, welcher bei der Errichtung des Systems erforderlich ist, da ein Fundament gebaut bzw. gegründet werden muss, auf welchem die einzelnen Schallschutzelemente festgelegt werden.

Die vorliegende Erfindung zielt nun darauf ab, ein niedrigbauendes Schallschutzsystem für Verkehrswege, insbesondere für Schienenwege zur Verfügung zu stellen, welches einerseits den Schall nahezu ausschließlich reflektiert und andererseits schnell und zuverlässig errichtet werden kann, ohne dass aufwändige Arbeiten, wie beispielsweise Betonieren eines Fundaments oder dgl. erforderlich sind.

Zur Lösung dieser Aufgabe ist das erfindungsgemäße Schallschutzsystem im Wesentlichen dadurch gekennzeichnet, dass ein eine Auflagerfläche des Schallschutzelements ausbildender Schenkel des Schallschutzelements eine Längserstreckung aufweist, die einen von der Auflagerfläche beabstandeten Anlenkpunkt für eine gegebenenfalls die Materialstärke einer Rückfläche überragenden Deckfläche des Schallschutzelements überragt, dass der die Rückfläche des Schallschutzelements ausbildende Schenkel mit wenigstens einem Auftritt versehen ist, und dass die Auftritte von benachbart angeordneten Schallschutzsystemen in der Höhe zueinander versetzt angeordnet sind. Indem einerseits jedes Schallschutzelement einstückig ausgebildet ist und andererseits ein eine Auflagefläche des Schallschutzelements ausbildender Schenkel des Schallschutzelements eine Längserstreckung aufweist, die einen von der Auflagerfläche beabstandeten Anlenkpunkt für eine gegebenenfalls die Materialstärke der Rückfläche überragenden Deckfläche des Schallschutzelements überragt, gelingt es, das Schallschutzelement einfach auf dem Boden im Bereich neben der zu erwartenden Schallquelle, wie beispielsweise neben einem Schienenweg aufzustellen, wo es aufgrund dieser spezifischen Konstruktion angeordnet werden kann, ohne dass eine weitere Festlegung am Untergrund erforderlich ist. Um ein Umkippen des Schallschutzelements neben der Schallquelle mit Sicherheit zu vermeiden, kann beispielsweise im Fall eines Schallschutzelements neben einem Schienenweg das Schallschutzelement im Bereich seiner Auflagerfläche bis zu einer bestimmten Tiefe in dem Gleisbett eingebettet werden und mit dem Schotter des Gleisbetts bedeckt werden, wodurch ein willkürliches Verrücken, insbesondere durch Druck- und Sogkräfte des Zugverkehrs mit Sicherheit hintangehalten wird. Weiterhin wird durch eine derartige Konstruktion auch ein Kippen des Elements entweder beabsichtigt oder unbeabsichtigt, insbesondere aufgrund des Gewichts des Gleisbetts hintangehalten.

Indem das erfindungsgemäße Schallschutzsystem so ausgebildet ist, dass der die Rückfläche des Schallschutzsystems ausbildende Schenkel mit wenigstens einem Auftritt versehen ist, kann weiterhin beim Evakuieren von Fahrzeugen nicht nur die Oberseite des Schallschutzelements als Auftritt verwendet werden, sondern auch von dem Schallschutzsystem leicht in das umgebende Gelände abgestiegen werden. Derartige Auftritte, wenn sie in das Schallschutzelement direkt eingelassen sind, stellen hierbei sicher, dass einerseits die Schall reflektierende Wirkung des Systems nicht verschlechtert wird und andererseits ein Evakuieren von Personen von innerhalb des Schallschutzsystems leicht und zuverlässig möglich wird, da das Übersteigen des Schallschutzsystems besonders einfach bewerkstelligt werden kann.

Wenn die Auftritt von benachbart angeordneten Schallschutzelementen in der Höhe zueinander versetzt angeordnet sind, wird im Wesentlichen eine Treppe für zu überquerende Personen oder eine Treppe für Personen, welche Zutritt zu dem Schallschutzsystem benötigen, um beispielsweise Gleisbauarbeiten vorzunehmen, zur Verfügung gestellt.

Durch die spezifische C-Form, welche sich in Richtung zur Schallquelle öffnet, wird weiterhin sichergestellt, dass der von der Lärmquelle, beispielsweise dem Schienenfahrzeug, insbesondere einer Eisenbahn emittierte Schall mit Sicherheit in das Gleisbett reflektiert wird, wo er in der Folge absorbiert wird. In diesem Zusammenhang ist zu berücksichtigen, dass die Quelle der Lärmbelästigung dieser Fahrzeuge im Bereich ihrer Räder liegt, welche durch Rollreibung auf dem Untergrund, beispielsweise den Schienen, für den größten Teil des Lärms, welchen derartige Fahrzeuge beim Fahren verursachen, verantwortlich sind, so dass es ausreichend ist, ein Schallschutzsystem zur Verfügung zu stellen, welches in der Höhe die Oberkante der jeweiligen Räder abschließt bzw. diese geringfügig überragt. Die beste Reflexion des emittierten Schalls wird hierbei dann erzielt, wenn der Anlenkpunkt für eine gegebenenfalls vorgegebene Deckfläche möglicht hohe der Schallquelle angeordnet ist. Mit einem derartigen niedrigbauenden Schallschutzelement kann weiterhin sichergestellt werden, dass einerseits die im Fahrzeug, insbesondere Schienenfahrzeug sitzenden Personen einen freien Ausblick auf die Umgebung haben und auch die hinter der Lärmschutzsystem beheimateten Anrainer nicht durch hohe Wände vor ihren Anwesen bzw. Wohnungen beeinträchtigt sind.

Unter einer "C-Form" des Schallschutzelements wird hierbei jede Form verstanden, welche einem C ähnlich ist, wie beispielsweise ein C mit gerader zur Schallquelle geneigter Rückfläche, mit und ohne Deckfläche eines C, d.h. auch eine geneigte L-Form ebenso wie Formen, deren Deckflächen parallel zur Grundfläche sind, deren Deckflächen mit der Grundfläche einen Winkel einschließen und solche, deren Längserstreckung von Grund- und Deckfläche gleich oder voneinander verschieden ist.

Um eine Sollbruchstelle des Schallschutzsystems auszuschließen und eine besonders lange Standzeit desselben zu gewährleisten, ist das Schallschutzsystem gemäß der Erfindung bevorzugt so weitergebildet, dass das Schallschutzelement mit einem mit dem die Auflagerfläche ausbildenden Schenkel einen stumpfen Winkel einschließenden und mit dem die Rückfläche bzw. -wand ausbildenden Schenkel einen spitzen Winkel einschließenden Verbindungssteg ausgebildet ist. Durch Vorsehen eines Verbindungsstegs zwischen der Auflagefläche und der Rückfläche des im Wesentlichen C-förmigen Schallschutzelements wird sichergestellt, dass ein unbeabsichtigtes Knicken des Schallschutzelements, insbesondere Abknicken desselben, im Bereich der Anlenkung zwischen Auflagerfläche und Rückfläche auch bei hohen Belastungen, wie beispielsweise einem unbeabsichtigten Druck von außen oder einer Belastung von oben mit Sicherheit ausgeschlossen werden kann.

Indem, wie dies einer Weiterbildung der Erfindung entspricht, das Schallschutzsystem so ausgebildet ist, dass im Bereich des Verbindungsstegs wenigstens eine, insbesondere eine Mehrzahl von Durchbrechungen vorgesehen ist, wird ein sicheres Ableiten von Regenwasser aus dem Bereich des Schienenwegs bzw. einer Fahrstraße, an welcher das Schallschutzelement angeordnet ist, gewährleistet, indem die Flüssigkeit von dem jeweiligen Verkehrsweg durch die Durchbrechungen in die Umgebung, sei es in ein Kanalnetz oder in Felder oder dgl. abgeleitet wird.

Um die Standfestigkeit der einzelnen Schallschutzelemente weiter zu erhöhen und insbesondere sicherzustellen, dass ein unbeabsichtigtes Kippen bzw. Verrücken derselben, mit Sicherheit hintangehalten ist, ist das erfindungsgemäße Schallschutzsystem so weitergebildet, dass der die Auflagefläche ausbildende Schenkel des Schallschutzelements eine größere Materialstärke als die weiteren Schenkel des Schallschutzelements aufweist. Hierbei ist es insbesondere bevorzugt, dass die Materialstärke der Auflagerfläche wenigstens das 1,5-fache, insbesondere wenigstens das 7-fache der weiteren Schenkel des Schallschutzelements aufweist. Durch eine derartige Konstruktion gelingt es, einen stabilen Fuß bzw. eine stabile Standfläche des Schallschutzelements zur Verfügung zu stellen, welche ein ausreichendes Eigengewicht aufweist, in einer Lagesicherung zur Verfügung zu stellen, welche den verschiedensten Belastungen sicher standhält und welche auch gewährleistet, dass auch bei Einwirken von großen Momenten, wie ein Aufprall eines Fahrzeugs oder Druck- und Sogkräfte während des Vorbeifahrens von Zügen oder Lastkraftwagen, ein unbeabsichtigtes Verschieben um große Strecken bzw. Zerstören des Schallschutzelements mit Sicherheit hintangehalten ist.

Alternativ kann der die Auflagerfläche ausbildende Schenkel des Schallschutzelements zur Aufnahme eines Auflagerelements ausgebildet sein. Bei einer derartigen Ausbildung kann beispielsweise der die Auflagerfläche ausbildende Schenkel des Schallschutzelements an seinem zur Schallquelle gewandten Ende geringfügig nach oben gebogen sein, in welchem Fall in die dadurch ausgebildete Vertiefung ein beschwerendes Element, wie beispielsweise ein Betonstein oder dgl. eingelegt werden kann. Mit einer derartigen Ausbildung können relativ leichtgewichtigte Schallschutzelemente nebeneinander angeordnet werden und in der Folge durch Einsetzen von beschwerenden Elementen gegen ein Verschieben bzw. Bewegen gesichert werden. Wenn weiterhin die Auflagerelemente in der Form der Auflagerfläche entsprechen, können auch einzelne Schallschutzelemente verbaut werden und es entsteht beim Zusammenfügen mehrerer Schallschutzelemente andererseits ein Schallschutzsystem, welche die gleiche Sicherheit des Systems wie "schwere" Elemente bieten. Selbstverständlich kann ein derartiges Auflagerelement auch so ausgebildet sein, dass die in dem Schallschutzelement vorgesehenen Durchtrittöffnungen für Regenwasser sich in dem Auflagerelement fortsetzen bzw. auch in diesem ausbildet sind. In gleicher Weise können beispielsweise Ausnehmungen in dem Auflagerelement vorgesehen sein, um Fluchtkanäle für kleine Tiere oder dgl. auszubilden.

Dadurch, dass die Deckfläche als gesonderter an die Rückfläche des Schallschutzelements angelenkter Schenkel ausgebildet ist, gelingt es einerseits, die Oberkante des Schallschutzsystems noch näher an die Schallquelle heranzuführen und somit die gesamte Abschirmung zu verbessern. Bei verbesserter Abschirmung wird gleichzeitig sichergestellt, dass ein noch größerer Teil des emittierten Schalls in dem Boden, beispielsweise in das Gleisbett reflektiert und dort absorbiert wird. Weiterhin gelingt es mit einer derartigen Ausbildung, die Deckfläche als Auftrittsfläche für Fahrgäste, welche beispielsweise einen auf offener Strecke zu überquerenden Zug verlassen müssen, zu benutzen.

Indem, wie dies einer Weiterbildung der vorliegenden Erfindung entspricht, der eine Deckfläche ausbildende Schenkel des Schallschutzelements als im Wesentlichen waagrechte Auftrittfläche ausgebildet ist, kann bei einem derartigen Schallschutzsystem auf das Bereitstellen von gesonderten Fluchtwegen verzichtet werden, da mit einer derartigen Variante das Schallschutzsystem per se leicht als "Fluchtweg" bzw. Flucht helfendes Element eingesetzt werden kann. Insbesondere wenn das Schallschutzsystem neben Bahngleisen angewandt wird, gelingt es mit einer derartigen Ausbildung beispielsweise, Leute direkt aus einem auf freier Strecke stehenden Zug zu evakuieren, da diese unmittelbar von dem Wagon auf die Oberkante bzw. Auftrittsfläche des Schallschutzelements auftreten können und somit nicht in das Gleisbett hinuntersteigen müssen, was insbesondere für ältere oder gehbehinderte Personen äußerst beschwerlich ist.

Indem, wie dies einer Weiterbildung der Erfindung entspricht, die Deckfläche rutschfest unter der reflektierenden Oberfläche ausgebildet ist, wird ihre Einsatzmöglichkeit als Fluchtweg weiter verbessert und überdies auch die Möglichkeit geschaffen, dass in der Nacht zu überquerende Personen aus Zügen, die Oberkante und somit die Auftrittsfläche sicher erkennen können.

Wenn, wie dies einer Weiterbildung der Erfindung entspricht, dass der wenigstens eine Auftritt des die Rückfläche des Schallschutzelements ausbildenden Schenkels als in eine von der Schallquelle abgewandte Seite Rückfläche eingesenkte Stufe ausgebildet ist, ist das Verlassen von beispielsweise auf freier Strecke stehenden Züge auch für Kinder oder ältere Personen ohne zusätzliche Hilfsmaßnahmen einfach möglich, indem sie von dem Zug direkt auf die Oberkante des Schallschutzelements steigen und von diesem über die in der Rückfläche des Schallschutzelements ausgebildeten Stufen das System nach außen verlassen.

In diesem Zusammenhang muss festgehalten werden, dass eine derartige Ausbildung des Schallschutzelements nur dadurch möglich wird, dass das Schallschutzelement insgesamt niedrigbauend ist. So weist es beispielsweise im Fall des Einsatzes an Eisenbahnen eine Höhe über Schienenkante von etwa 30 cm bis 1 m, insbesondere 55 cm bis 76 cm auf, wodurch ein Auftreten aus einem Zug auf die obere Deckfläche bzw. auf den Auftritt des C-förmigen Schallschutzelements problemlos ermöglicht wird. Gleichzeitig wird mit einer derartigen Höhe eines Schallschutzsystems sichergestellt, dass die hauptsächlich Lärm verursachenden Elemente eines Zugs, nämlich die Räder von dem Schallschutzsystem vollständig übergriffen sind, so dass nicht nur ein effektives Reflektieren des Schalls in das Gleichbett gewährleistet wird, sondern gleichzeitig ein formschönes, sicheres und einfach zu versetzendes Schallschutzsystem zur Verfügung gestellt wird.

Um auch beispielsweise dem Personal, welches am dem Fahrweg, insbesondere an dem Schienenweg Ausbesserungsarbeiten vornimmt, das Verlassen des Schallschutzsystems sicher und zuverlässig zu ermöglichen, ist gemäß einer Weiterbildung der Erfindung das System so ausgebildet, dass der wenigstens eine Auftritt des die Rückfläche des Schallschutzelements ausbildenden Schenkels als ein von einer der Schallquelle zugewandten Seite der Rückfläche vorragender Auftritt ausgebildet ist. Derartige Auftritte sind hierbei so ausgebildet, dass Arbeiten an der Gleisanlage, wie beispielsweise das Schneeräumen ohne Beeinträchtigung möglich sind.

Um eine möglichst vollständige Reflexion des Schalls in das Boden- bzw. Erdmaterial oder das Gleisbett im Bereich der Schallquelle zu gewährleisten, ist gemäß einer Weiterbildung der Erfindung das Schallschutzelement so ausgebildet, dass die Rückfläche wenigstens in ihrem Fußpunkt zur Lärmquelle geneigt ausgebildet ist. Durch eine derartige Neigung wird sichergestellt, dass der Schall in dem Bodenbereich reflektiert wird. Es ist in diesem Zusammenhang jedoch möglich, dass zumindest Einzelbereiche der Rückfläche auch senkrecht bzw. mit einer von der Neigung im Fußpunkt unterschiedlichen Neigung ausgebildet sind.

Für eine noch weitere Verringerung der nach außerhalb eines Schallschutzelements dringenden Geräuschbelästigung ist gemäß einer Weiterbildung der Erfindung das Schallschutzsystem so ausgebildet, dass das Schallschutzelement an der der Schallquelle zugewandten Seite eine Schall absorbierende Einlage aufweist. Durch Vorsehen derartiger Einlagen wird wenigstens ein Teil des Schalls direkt an dem Schallschutzelement absorbiert und nur ein Teil in beispielsweise das Gleisbett oder direkt in den Verkehrsweg reflektiert, so dass von dem Gleisbett bzw. dem Verkehrsweg nur mehr eine geringere Intensität des Schalls absorbiert werden muss.

Um insbesondere eines ausreichende Standfestigkeit des Schallschutzsystems ohne weiteres Vorsehen eines Fundaments zu ermöglichen, ist gemäß einer Weiterbildung der Erfindung jedes Schallschutzelement aus Faserbeton, insbesondere Glasfaserbeton oder Stahlbeton ausgebildet. Insbesondere der Einsatz von Faserbeton, wie Glasfaserbeton garantiert lange Standzeiten bei gleichzeitig ästhetischem Aussehen und garantiert, dass beispielsweise ein Verschieben der einzelnen Schallschutzelemente aufgrund von mechanischen Beanspruchungen mit Sicherheit hintangehalten wird.

Um die Gefahr des Verschiebens von Einzelelementen noch weiter abzusenken, ist gemäß einer Weiterbildung der Erfindung das Schallsehutasystem so ausgebildet, dass die Schallschutzelemente an ihren zu benachbarten Schallschutzelementen gewandten Seitenkanten mit Vorsprüngen oder Materialverjüngungen ausgebildet sind, die in komplementäre Vorsprünge bzw. Materialverjüngungen benachbarter Schalschutzelemente eingreifen bzw. kämmen. Indem die Schallschutzelemente an ihren zum benachbarten Schallschutzelementen gewandten Seitenkanten mit Vorsprüngen und/oder Materialverjüngungen ausgebildet sind, die in komplementäre Vorsprünge bzw. Materialverjüngungen benachbarter Schallschutzelemente eingreifen bzw. mit diesen Kämmen, wird ein bündiges Ineinanderfügen der einzelnen Schallschutzelemente sichergestellt, wodurch nicht nur die Ästhetik des gesamten Schallschutzsystems erhöht wird, sondern auch dessen Sicherheit weiter verbessert werden kann.

Die Erfindung wird nachfolgend anhand von in der Zeichnung dargestellten Ausführungsbeispielen näher erläutert. In dieser zeigen:
Fig. 1 einen Querschnitt durch ein Schallschutzelement gemäß der Erfindung;
Fig. 2 einen Querschnitt durch eine Abwandlung des Schallschutzelements von Fig. 1;
Fig. 3a einen Querschnitt durch ein Schallschutzelement gemäß der Erfindung mit absorbierenden Einlagen;
Fig. 3b einen Querschnitt durch eine abgewandelte Ausbildung des Schallschutzelements gemäß der Erfindung;
Fig. 4a einen Querschnitt durch ein Schallschutzelement gemäß der Erfindung mit darin festgelegten bzw. ausgebildeten Auftritten bzw. stufenartigen Elementen;
Fig. 4b einen analogen Schnitt wie Fig. 4a, jedoch mit an anderen Positionen angeordneten Stufen bzw. Auftritten;
Fig. 5 ein Querschnitt durch ein eine größere Wandstärke aufweisendes Schallschutzelement gemäß der Erfindung; und
Fig. 6 eine Draufsicht auf zwei miteinander verbundene Schallschutzelemente gemäß der Erfindung.

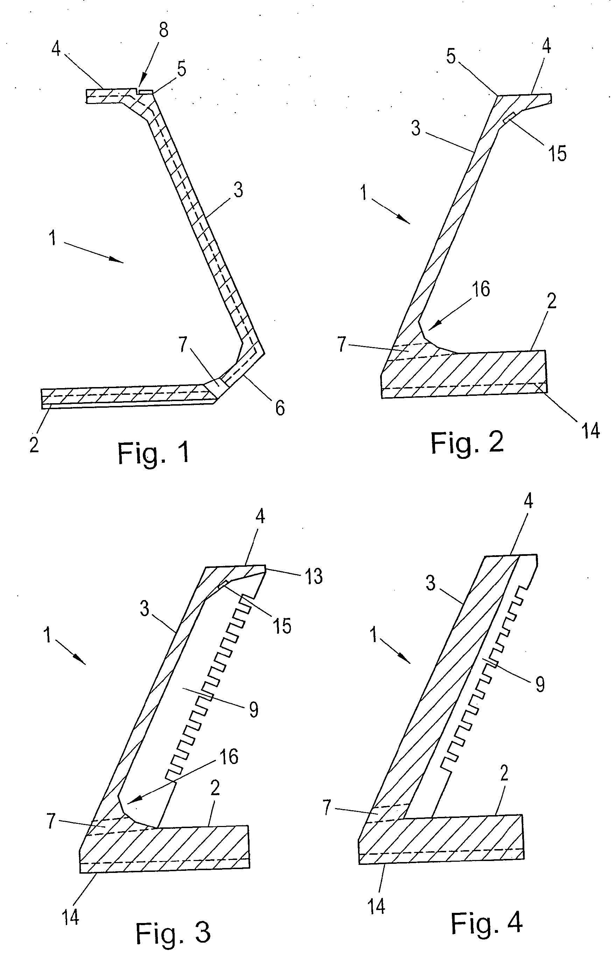

In Fig. 1 ist mit 1 ein Schallschutzelement gemäß der vorliegenden Erfindung bezeichnet, welches im Wesentlichen C-förmig ausgebildet ist und sich zu einer in den Figuren nicht dargestellten Schallquelle öffnet. Das Schallschutzelement 1 weist hierbei eine Auflagerfläche 2, eine Rückfläche 3 sowie eine Deckfläche 4 auf. Die Auflagerfläche 2 ist hierbei so ausgebildet, dass der sie ausbildende Schenkel des Schallschutzelements 1 eine Länge aufweist, welche den Anlenkpunkt 5 der Rückfläche 3 an die Deckfläche 4 überragt. Eine derartige Länge der Auflagerfläche 2 ist für einen sicheren Stand des Schallschutzelements 1 erforderlich. Weiterhin ist das Schallschutzelement 1 mit einem Verbindungssteg 6 ausgebildet, welcher zwischen der Auflagerfläche 2 und der Rückfläche 3 angeordnet ist, um die Gesamtstabilität des Schallschutzelements 1 zu erhöhen. Im Bereich der Anlenkung des Verbindungsstegs 6 an die Auflagerfläche 2 ist bei der Darstellung gemäß Fig. 1 weiterhin eine Durchbrechung 7 dargestellt, welche Durchbrechung 7 beispielsweise für den Ablauf von Regenwasser vorgesehen ist. Diese Durchbrechung 7 kann im Bedarfsfall auch von Tieren als Fluchtweg benutzt werden und ihre lichte Weite ist ausreichend, um beispielsweise kleineren Tieren, wie Mäusen und dgl., Durchlass zu gewähren. Um das Regenwasser sicher abzuleiten, kann die Auflagerfläche 2 auch an ihrer Unterseite mit schematisch angedeuteten Rillen 14 ausgebildet sein, um einen Ablauf des Regenwassers zu gewährleisten.

Schließlich ist in der Darstellung von Fig. 1 die Deckfläche 4 mit einem kleinen Absatz 8 ausgebildet, in welchen Absatz 8 schematisch dargestellt, beispielsweise ein Reflektor bzw. bei Ausbildung des Schallschutzelements aus Mantelbeton eine Erdung 15 eingesetzt werden kann, welcher auch auf die Rückfläche 3 ragend ausgebildet sein kann, um die Sichtbarkeit der Oberkante des Schallschutzelements 1 auch in der Nacht zu gewährleisten.

Gegebenenfalls kann die Deckfläche 4 auch mit einer rutschfesten und/oder reflektierenden Oberfläche ausgebildet sein, damit die Sichtbarkeit der Oberfläche in der Nacht verbessert wird.

In Fig. 2 ist ein Querschnitt einer Variante des Schallschutzelements 1 von Fig. 1 dargestellt, wobei die Bezugszeichen von Fig. 1 so weit wie möglich beibehalten sind.

Das Schallschutzelement 1 ist hierbei in Abweichung von der Darstellung gemäß Fig. 1 mit einer in Bezug auf die Deckfläche 4 bzw. Rückfläche 3 verdickten Auflagerfläche 2 ausgebildet. Eine derartige verdickte bzw. eine größere Materialstärke aufweisende Auflagerfläche 2 gewährleistet hierbei insbesondere, dass ein unbeabsichtigtes Kippen bzw. Verschieben des Schallschutzelements 1 durch Druck und Soglasten durch den Zugverkehr hintangehalten wird. Darüber hinaus wird durch eine derartige Ausbildung das Gesamtgewicht des Schallschutzelements 1 deutlich erhöht, so dass mit einer derartigen Ausbildung des Schallschutzelements 1 gewährleistet ist, dass dieses auch ohne ein gesondert dafür angefertigtes Fundament sicher und zuverlässig ohne zusätzliche Verankerung im Boden an dem dafür vorgesehenen Ort aufgestellt werden kann. Anstelle der verdickten Ausbildung der Auflagerfläche 2 könnte auch ein passendes Auflagerelement auf die Auflagerfläche 2 aufgebracht werden, um die nötige Materialstärke im Bereich des Fußes bzw. der Auflagerfläche 2 des Schallschutzelements 1 zu gewährleisten. In Fig. 2 ist abweichend von der Darstellung von Fig. 1 die Rückfläche 3 direkt an die Auflagerfläche 2 angelenkt und in der zu einer Schallquelle zugewandten Seite des Schallschutzelements 1 ist der Bereich der Verbindung zwischen Rückfläche 3 und Auflagerfläche 2 mit einer insbesondere verlaufend bzw. gekrümmt ausgebildeten Hohlkelle 16 dargestellt.

Bei der Darstellung von Fig. 3 sind wiederum die Bezugszeichen von Fig. 1 beibehalten. Bei Fig. 3a sind in das Schallschutzelement 1 von Fig. 1 an der zur Schallquelle gerichteten Innenseite, insbesondere der Rückfläche 3 eine mit der Endkante 13 der Deckfläche 4 fluchtende Schall absorbierende Einlage 9 eingelegt. Eine derartige Schall absorbierende Einlage 9 kann hierbei ein Betonwerkstoffabsorber sein, welcher untrennbar mit dem Schallschutzelement 1 verbunden ist, beispielsweise indem er einbetoniert wird oder aber eine nachträglich befestigte, Schall absorbierende Einlage 9.

In Fig. 3b ist das Schallschutzelement 1 in einer Ausbildung dargestellt, in welcher die Rückfläche 3 sowie die absorbierende Einlage 9 gemeinsam eine Deckfläche 4 des Schallschutzelements ausbilden. Die Schall absorbierende Einlage 9 ist hierbei wiederum aus einem Betonwerkstoffabsorber gebildet, worauf die Auftrittsfläche insgesamt für den Benutzer keinen Unterschied zu einer einstückig ausgebildeten Deckfläche 4, wie dies in Fig. 3a dargestellt ist, aufweist. Die Anlenkung der Rückfläche 3 an die Bodenfläche 2 ist hierbei in der Variante gemäß Fig. 3b so dargestellt, dass die Rückfläche 3 bzw. deren absorbierende Einlage 9 zur Bodenfläche und in Richtung zu einer Schallquelle geneigt ausgebildet sind.

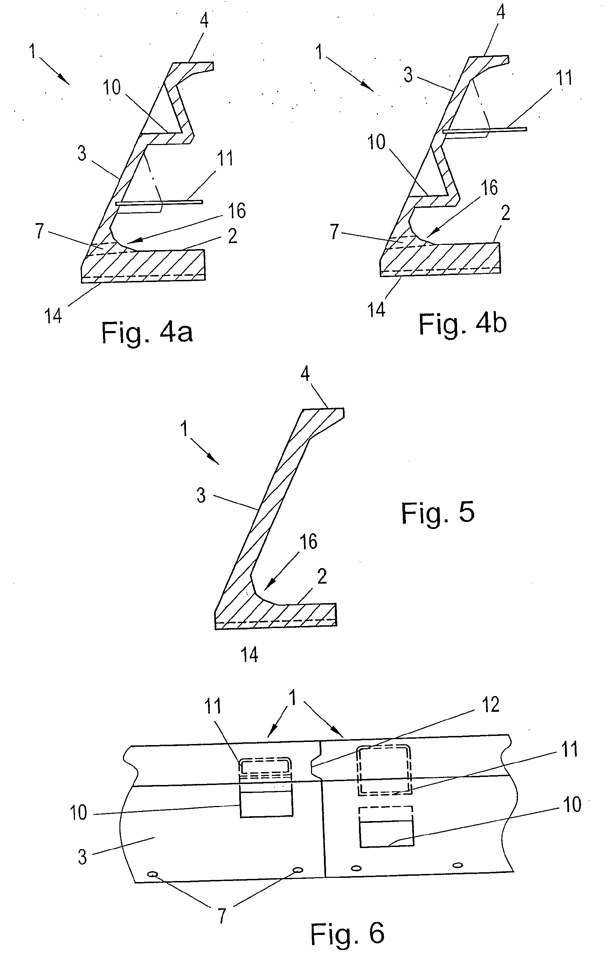

In Fig. 4a bzw. 4b sind jeweils Querschnitte durch die Endbereiche und insbesondere durch zwei voneinander verschiedenen Endbereiche des Schallschutzelements 1 dargestellt. In den benachbarten Schallschutzelementen 1 zugewandten Endbereichen sind hierbei an der Außenseite der Rückfläche 3 des Schallschutzelements 1 Auftritte 10 ausgebildet, welche Auftritte 10 als eingesenkte Stufen ausgebildet sind. Diese eingesenkten Stufen 10 sind hierbei in den jeweiligen Endbereichen in unterschiedlichen Höhelagen angeordnet, so dass beim nebeneinander Anordnen von zwei Schallschutzelementen 1 eine Art Treppe zur Verfügung gestellt wird, wie dies nachfolgend in Fig. 5 ersichtlich ist. In gleicher Weise sind an der Innenseite des Schallschutzelements 1 vorragende Auftritte 11 ausgebildet, welche ein leichtes Überwinden der Schallschutzelemente 1 auch von der der Schallquelle zugewandten Seite des Schallschutzelements 1 ermöglichen sollen. Derartige Auftritte 11 sind beispielsweise für Bahnpersonal, welches Wartungsarbeiten an den Gleisen durchführt bzw. Reinigungspersonal erforderlich und können daher einfach als Metallbügel ausgebildet werden, da derartige Personen üblicherweise keinerlei motorische Beeinträchtigungen haben.

Im Falle eines Nothalts von beispielsweise einem Eisenbahnzug kann mit einer derartigen Ausbildung des Schallschutzsystems und insbesondere von zwei benachbarten Schallschutzelementen 1 beispielsweise ein Fahrgast den Zug dadurch verlassen, dass er aus einer Türe des Zugs unmittelbar auf die Deckfläche 4 des Schallschutzelements 1 steigt, welche Deckfläche 4 im Wesentlichen auf gleicher Höhe wie die Türe des Zugs ist und von dieser auch nur einige wenige Zentimeter beabstandet ist. In der Folge kann der Fahrgast durch Benützung der Stufen 10 an der Außenseite der Rückfläche 3 des Schallschutzelements 1 nach Art einer Leiter am Schallschutzelement 1 hinuntersteigen und beispielsweise außerhalb des Schallschutzelements die Bahntrasse betreten. Eine derartige Ausbildung hat insbesondere den Vorteil, dass die extrem hohe Stufe, welche beim Verlassen des Zugs zwischen der untersten vorgesehenen Treppe und der Bahntrasse üblicherweise vorliegt, auf diese Weise vermieden werden kann.

In Fig. 5 ist ein Schallschutzelement 1 mit größerer Wandstär-ke der Rückfläche 3 und der Deckfläche 4 im Vergleich zu der Ausbildung von Fig. 1 dargestellt, so dass ohne eine zusätzliche Verdickung der Auflagerfläche 2 das Schallschutzelement 1 ein ausreichendes Eigengewicht aufweist, um gegen ein unbeabsichtigtes Verschieben gesichert zu sein.

In Fig. 6 ist eine Draufsicht auf zwei nebeneinander angeordnete Schallschutzelemente 1 dargestellt, in welcher Draufsicht unter anderem erkennbar ist, dass die Auftritte 11 ebenfalls in verschiedenen Höhen an benachbarten Endbereichen von Schallschutzelementen 1 angeordnet sind, um auch dem Bahnpersonal ein einfaches Verlassen des Innenbereichs bzw. des zur Schallquelle zugewandten Bereichs eines Schallschutzsystems zu ermöglichen. Weiterhin ist dieser Darstellung entnehmbar, dass für einen sicheren und auch formschönen Verbund von zwei benachbarten Schallschutzelementen 1 die Schallschutzelemente 1 an ihren zu benachbarten Schallschutzelementen zugewandten Seitenkanten mit Vorsprüngen 12 versehen sind, damit zwei benachbarte Schallschutzelemente 1 bei ordnungsgemäßer Anordnung unmittelbar kämmen und somit weder eine Verschiebung der Schallschutzelemente 1 in Höhenrichtung noch ein Klaffen zwischen zwei Schallschutzelementen 1 zu verursacht wird.

## Patentansprüche

1. Schallschutzsystem für Verkehrswege, insbesondere Schienenwege, umfassend eine Mehrzahl von im Wesentlichen C-förmigen sich zu einer Schallquelle öffnenden, mit der Waagrechten einen spitzen Winkel einschließende, emittierten Schall reflektierende, miteinander verbindbare niedrigbauende Schallschutzelemente (1), wobei jedes Schallschutzelement (1) einstückig ausgebildet ist, **dadurch gekennzeichnet, dass** ein eine Auflagerfläche (2) des Schallschutzelements (1) ausbildender Schenkel des Schallschutzelements (1) eine Längserstreckung aufweist, die einen von der Auflagerfläche (2) beabstandeten Anlenkpunkt (5) für eine gegebenenfalls die Materialstärke einer Rückfläche (3) überragenden Deckfläche (4) des Schallschutzelements (1) überragt, dass der die Rückfläche (3) des Schallschutzelements (1) ausbildende Schenkel mit wenigstens einem Auftritt (11) versehen ist, dass die Auftritte (11) von benachbart angeordneten Schallschutzelementen (1) in der Höhe zueinander versetzt angeordnet sind.

2. Schallschutzsystem nach Anspruch 1, **dadurch gekennzeichnet, dass** das Schallschutzelement (1) mit einem mit dem die Auflagefläche (2) ausbildenden Schenkel einen stumpfen Winkel einschließenden und mit dem die Rückfläche (3) ausbildenden Schenkel einen spitzen Winkel einschließenden Verbindungssteg (6) ausgebildet ist.

3. Schallschutzsystem nach Anspruch 1, oder 2, **dadurch gekennzeichnet, dass** das Schallschutzelement (1) im Bereich des Verbindungsstegs (6) wenigstens eine, insbesondere eine Mehrzahl von Durchbrechungen (7) aufweist.

4. Schallschutzsystem nach Anspruch 1, 2 oder 3, **dadurch gekennzeichnet, dass** der die Auflagefläche (2) ausbildende Schenkel des Schallschutzelements (1) eine größere Materialstärke als die weiteren Schenkel des Schallschutzelements (1) aufweist.

5. Schallschutzsystem nach Anspruch 4, **dadurch gekennzeichnet, dass** die Materialstärke der Auflagerfläche (2) wenigstens das 1,5 fache, insbesondere wenigstens das Siebenfache der weiteren Schenkel des Schallschutzelements (1) beträgt.

6. Schallschutzsystem nach einem der Anspruch 1, 2 oder 3, **dadurch gekennzeichnet, dass** der die Auflagerfläche (2) ausbildende Schenkel des Schallschutzelements (1) zur Aufnahme eines Auflagerelements ausgebildet ist.

7. Schallschutzsystem nach Anspruch 6, **dadurch gekennzeichnet, dass** das Auflagerelement der Form der Auflagerfläche (2) entsprechen kann und mit dieser verbindbar ausgebildet ist.

8. Schallschutzsystem nach einem der Ansprüche 1 bis 7, **dadurch gekennzeichnet, dass** der die Deckfläche (4) ausbildende Schenkel des Schallschutzelements (1) als im Wesentlichen waagrechte Auftrittsfläche ausgebildet ist.

9. Schallschutzsystem nach Anspruch 8, **dadurch gekennzeichnet, dass** die Deckfläche (4) mit einer rutschfesten und/oder reflektierenden Oberfläche ausgebebildet ist.

10. Schallschutzsystem nach Anspruch 9, **dadurch gekennzeichnet, dass** der wenigstens eine Auftritt (11) in den die Rückfläche (3) des Schallschutzelements (1) ausbildenden Schenkels als in eine von der Schallquelle abgewandte Seite der Rückfläche (3) eingesenkte Stufe (10) ausgebildet ist.

11. Schallechutzsystem nach Anspruch 10, **dadurch gekennzeichnet, dass** der wenigstens eine Auftritt des die Rückfläche (3) des Schallschutzelements (1) ausbildenden Schenkels als ein von einer der Schallquelle zugewandten Seite der Rückfläche (3) vorragender Auftritt (11) ausgebildet ist.

12. Schallschutzsystem nach einem der Ansprüche 1 bis 11, **dadurch gekennzeichnet, dass** das die Rückfläche (3) wenigstens in ihrem Fußpunkt zur Lärmquelle geneigt ausgebildet ist.

13. Schallschutzsystem nach einem der Ansprüche 1 bis 12, **dadurch gekennzeichnet, dass** das Schallschutzelement (1) an der der Schallquelle zugewandten Seite eine Schall absorbierende Einlage (9) aufweist.

14. Schallschützsystem nach einem der Ansprüche 1 bis 13, **dadurch gekennzeichnet, dass** jedes Schallschutzelement (1) aus Faserbetön, insbesondere Glasfaserbeton oder Stahlbeton ausgebildet ist.

15. Schallschutzsystem nach einem der Ansprüche 1 bis 14, **dadurch gekennzeichnet, dass** die Schallschutzelemente (1) an ihren zu benachbarten Schallschutzelementen gewandten Seitenkanten mit Vorsprüngen (12) oder einer Materialverjüngung ausgebildet sind, die in komplementäre Vorsprünge (12) bzw. Materialverjüngungen benachbarter Schalschutzelemente (1) eingreifen bzw. kämmen.

## Claims

1. Soundproofing system for traffic routes, particularly rail routes, comprising a plurality of substantially C-shaped, low-profile soundproofing elements (1) that are connectable with each other and open towards a sound source, form an acute angle with the horizontal and reflect emitted sound, wherein each soundproofing element (1) is constructed as a single part, **characterised in that** a leg of the soundproofing element (1) which forms a supporting surface (2) of the soundproofing element (1) has a lengthwise extension that protrudes over a pivot point (5) located at a distance from the supporting surface (2) for a covering surface (4) of the soundproofing element (1) which can protrude over the material thickness of a rear surface (3), that the leg that forms the rear surface (3) of the soundproofing element (1) has at least one tread (11), that the tread (11) of adjacently located soundproofing elements (1) are offset with respect to each other in terms of height.

2. Soundproofing system according to claim 1, **characterised in that** the soundproofing element (1) is constructed with a connecting crosspiece (6) that forms an obtuse angle with the leg forming the supporting surface (2) and forms an acute angle with the leg forming the rear surface (3).

3. Soundproofing system according to claim 1 or 2, **characterised in that** the soundproofing element (1) includes at least one, particularly a plurality of breaches (7) in the area of the connecting crosspiece (6).

4. Soundproofing system according to claim 1, 2 or 3, **characterised in that** the leg of the soundproofing element (1) that forms the support surface (2) has a greater material thickness than the other legs of the soundproofing element (1).

5. Soundproofing system according to claim 4, **characterised in that** the material thickness of the supporting surface (2) is at least 1.5 times, particularly at least seven times greater than that of the other legs of the soundproofing element (1).

6. Soundproofing system according to claim 1, 2 or 3, **characterised in that** the leg of the soundproofing element (1) that forms the support surface (2) is designed to accommodate a supporting element.

7. Soundproofing system according to claim 6, **characterised in that** the supporting element can correspond to the shape of the supporting surface (2) and is constructed to be connectable with it.

8. Soundproofing system according to any one of claims 1 to 7, **characterised in that** the leg of the soundproofing element (1) that forms the covering surface (4) is constructed as a substantially horizontal tread surface.

9. Soundproofing system according to claim 8, **characterised in that** the covering surface (4) is constructed with a non-slip and/or reflective surface.

10. Soundproofing system according to claim 9, **characterised in that** the at least one tread (11) into the leg that forms the rear surface (3) of the soundproofing element (1) is constructed as a step (10) recessed into a side of the rear surface (3) facing away from the sound source.

11. Soundproofing system according to claim 10, **characterised in that** the at least one tread of the leg that forms the rear surface (3) of the soundproofing element (1) is constructed as a tread (11) that protrudes from a side of the rear surface (3) facing towards the sound source.

12. Soundproofing system according to any one of claims 1 to 11, **characterised in that** the rear surface (3) is constructed to incline towards the sound source at least at its food.

13. Soundproofing system according to any one of claims 1 to 12, **characterised in that** the soundproofing element (1) has a sound absorbing liner (9) on the side thereof facing the sound source.

14. Soundproofing system according to any one of claims 1 to 13, **characterised in that** each soundproofing element (1) is constructed from fibre concrete, particularly glass fibre reinforced concrete or ferroconcrete.

15. Soundproofing system according to any one of claims 1 to 14, **characterised in that** the lateral edges of the soundproofing elements (1) closest to the adjacent soundproofing elements are constructed with prominences (12) or a tapering of the material, which engage in and mesh with matching prominences (12) and taperings of the material in adjacent soundproofing elements (1).

## Revendications

1. Système d'insonorisation pour des voies de circulation, notamment des voies ferroviaires, comprenant une pluralité d'éléments insonorisants (1) en version basse, sensiblement en forme de C, s'ouvrant sur une source sonore, formant avec l'horizontale un angle aigu, réfléchissant le son émis, pouvant être assemblés les uns aux autres, chaque élément insonorisant (1) étant conçu en monobloc, **caractérisé en ce qu'**une branche de l'élément insonorisant (1) formant une surface portante (2) de l'élément insonorisant (1) présente une extension longitudinale qui saillit par dessus un point d'articulation (5) écarté de la surface portante (2) pour une surface de couverture (4) de l'élément insonorisant (1), saillant le cas échéant par dessus l'épaisseur de matière d'une surface arrière (3), **en ce que** la branche formant la surface arrière (3) de l'élément insonorisant (1) est munie d'au moins une marche (11), **en ce que** les marches (11) d'éléments insonorisants (1) placés au voisinage sont placées en étant mutuellement décalées en hauteur.

2. Système d'insonorisation selon la revendication 1, **caractérisé en ce que** l'élément insonorisant (1) forme un listel de liaison (6) incluant un angle obtus avec la branche formant la surface portante (2) et incluant un angle aigu avec la branche formant la surface arrière (3).

3. Système d'insonorisation selon la revendication 1 ou 2, **caractérisé en ce que** dans la région du listel de liaison (6), l'élément insonorisant (1) comporte au moins un, notamment une pluralité d'ajours (7).

4. Système d'insonorisation selon l'une quelconque des revendications 1, 2 ou 3, **caractérisé en ce que** la branche de l'élément insonorisant (1) formant la surface portante (2) présente une épaisseur de matière supérieure à celle des autres branches de l'élément insonorisant (1).

5. Système d'insonorisation selon la revendication 4, **caractérisé en ce que** l'épaisseur de matière de la surface portante (2) correspond à au moins 1,5 fois, notamment au moins au septuple des autres branches de l'élément insonorisant (1).

6. Système d'insonorisation selon l'une quelconque des revendications 1, 2 ou 3, **caractérisé en ce que** la branche de l'élément insonorisant (1) formant la surface portante (2) est conçue pour recevoir un élément portant.

7. Système d'insonorisation selon la revendication 6, **caractérisé en ce que** l'élément portant peut correspondre à la forme de la surface portante (2) et est conçu de manière à pouvoir être assemblé avec celle-ci.

8. Système d'insonorisation selon l'une quelconque des revendications 1 à 7, **caractérisé en ce que** la branche de l'élément insonorisant (1) formant la surface de couverture (4) est conçue en tant qu'une surface formant une marche sensiblement horizontale.

9. Système d'insonorisation selon la revendication 8, **caractérisé en ce que** la surface de couverture (4) est conçue avec une surface antidérapante et/ou réfléchissante.

10. Système d'insonorisation selon la revendication 9, **caractérisé en ce que** l'au moins une marche (11) dans la branche formant la surface arrière (3) de l'élément insonorisant (1) est conçue en tant que gradin (10) enclavé dans le côté de la surface arrière (3) qui est opposé à la source sonore.

11. Système d'insonorisation selon la revendication 10, **caractérisé en ce que** l'au moins une marche de la branche formant la surface arrière (3) de l'élément insonorisant (1) est conçue en tant qu'une marche (11) saillant à partir d'un côté de la surface arrière (3) qui fait face à la source sonore.

12. Système d'insonorisation selon l'une quelconque des revendications 1 à 11, **caractérisé en ce qu'**au moins sur son point bas, la surface arrière (3) est conçue en étant inclinée vers la source sonore.

13. Système d'insonorisation selon l'une quelconque des revendications 1 à 12, **caractérisé en ce que** sur le côté qui fait face à la source sonore, l'élément insonorisant (1) comporte une pièce intercalaire (9) isolante acoustique.

14. Système d'insonorisation selon l'une quelconque des revendications 1 à 13, **caractérisé en ce que** chaque élément insonorisant (1) est conçu en béton renforcé par fibres, notamment en béton renforcé par fibres de verre ou en béton armé.

15. Système d'insonorisation selon l'une quelconque des revendications 1 à 14, **caractérisé en ce que** sur leur arêtes latérales faisant face à des éléments insonorisants voisins, les éléments insonorisants (1) sont conçus avec des saillies (12) ou un rétrécissement de matière, qui s'engagent ou s'engrènent dans des saillies (12) ou rétrécissements de matière complémentaires d'éléments insonorisants (1) voisins.
